# EUROPEAN PATENT SPECIFICATION

(11) **EP 4 570 705 B1**
(45) Date of publication and mention of the grant of the patent: **22.04.2026**
(21) Application number: 23217237.9
(22) Date of filing: 15.12.2023
(51) Int. Cl.: B65G 1/04, B65G 1/06

(54) **AUTOMATED STORAGE**
AUTOMATISIERTES LAGER
ENTREPÔT AUTOMATISÉ

(43) Date of publication of application: 18.06.2025
(73) Proprietor: MOVU, 9160 Lokeren (BE)
(72) Inventor: Mouws, Steven, 9150 Bazel (BE)
(74) Representative: Ipsilon Belgium

(56) References cited:
- EP-B1- 2 657 155
- JP-A- 2011 219 266
- US-A1- 2012 259 482
- US-A1- 2017 008 701
- US-A1- 2022 402 699

## Description

### Field of the Invention

The present invention generally relates to shuttles adapted to move in a 2D or 3D automated storage systems, and racking systems being part of a 2D or 3D automated storage systems, and automated storage systems itself.

### Background of the Invention

Nowadays, shuttles are frequently used to efficiently store goods in automated storages, or automated storages systems. Shuttles may move in the racking system of such automated storage, to pick up or deliver goods from or to a dedicated storage location within a racking system. Shuttles may move in two directions within the racking system, usually two directions in a substantially horizontal plane. Optionally shuttle may move on different levels in the automated storage, and even may mov from one level to another level, either by driving itself between the levels, or by using a lift in the racking system.

The racking system typically may comprise storage lanes, along which length, several goods are positioned one after the other. In order to efficiently use the entire length of the storage lane, the shuttle moving goods into the storage lane, must know its position as exact as possible.

Prior art document US 2017/008701 A1 discloses thereby the preamble of independent claim 1.

### Summary of the Invention

The invention has as an object to provide an automated storage comprising a racking system and one shuttle adapted to move in the racking system, which shuttle is able to define its exact position within the storage lanes of the racking system, to avoid loss of storage space between adjacent goods stored in a storage lane due to uncertainty of the position where the shuttle drops of its goods carried.

According to a first aspect of the invention, an automated storage according to claim 1 is provided.

Along said storage lane means along substantially the whole length of the storage lane.

This elongate plane may be provided by an elongate bar or strip of material, like polymeric of metal material, e.g. steel or even stainless steel.

The plane is a plane being substantially perpendicular to the horizontal, and parallel to the walls of the lane.

The marks may repeat along the moving direction in the storage lane. Hence the mark may be present periodically along the moving direction of the storage lane.

According to some embodiments, the marks in or on said second elongate plane may be aligned with the marks in or on said first elongate plane.

Aligned means that the relative position of the marks on the first and second elongate plane is known.

According to some embodiments, for each marks in or on said first elongate plane, a marks in or on said first elongate plane may be provided at the same position in longitudinal direction of the storage lane.

The marks may be coloured spots, reflective spots, recesses, bulges, ribs and alike on said elongate plane, or may be perforations in said plane. The marks on a first elongate plane may be identical to the makers on the second elongate plane.

According to some embodiments, the marks may be perforations in said plane.

The spots or perforations may have a well-defined shape, perimeter or circumference. These spots or perforations may have a circular circumference, or a polygonal circumference. More preferably the spots or perforations may have a polygonal circumference, like a triangular, quadrangular, or hexagonal circumference. A quadrangular circumference is preferred, and most preferably a square or rectangular circumference, preferably having one side, being most preferably the longer side in case of a rectangular circumference, parallel to the longitudinal direction of the storage lane. The squares preferably have a side length of more than or equal to 15mm, such as more than or equal to 20mm. The squares preferably have a side length of less than or equal to 60mm, such as less than or equal to 50mm. The side length is preferably in the range of 22.5mm to 37.5mm, such as e.g. 25mm, 30mm or 35mm.

According to some embodiments, the marks may be perforations having a square circumference, preferably having one side parallel to the longitudinal direction of the storage lane.

More in general, the height of the marks is preferably less than or equal to 220mm, such as less than or equal to 150mm, even more preferred less than or equal to 60mm, such as less than or equal to 50mm. the height of the marks is preferably more than or equal to 15mm, such as more than or equal to 20mm. The height of the marks is preferably in the range of 22.5mm to 37.5mm, such as e.g. 25mm, 30mm or 35mm.

According to some embodiments, the width of said marks in longitudinal direction of the storage lane may be in the range of 15mm to 60mm.

More in general, the width of the marks in longitudinal direction is preferably less than or equal to 60mm, such as less than or equal to 50mm, even more preferred less than or equal to 45mm, such as less than or equal to 40mm. This width height of the marks is preferably more than or equal to 15mm, such as more than or equal to 20mm. The width of the marks is preferably in the range of 22.5mm to 37.5mm, such as e.g. 25mm, 30mm or 35mm.

According to some embodiments, the centre to centre interdistance of said marks in longitudinal direction of the storage lane may be in the range of 100mm to 300mm.

More in general, the centre to centre interdistance of the marks is preferably less than or equal to 2500mm, such as less than or equal to 2000mm, e.g. less than or equal to 1500mm, such as less than or equal to 1000mm, even more preferred less than or equal to 500mm, such as less than or equal to 400mm. The centre to centre interdistance of the marks is preferably more than or equal to 100mm, such as more than or equal to 150mm. The height of the marks is preferably in the range of 180mm to 250mm, such as e.g. 200mm, 210mm, 220mm or 230mm.

The position in height of the centre of the marks is preferably at the neutral line or neutral fiber of the plane plus or minus 10% of the height of the plane. Optionally the position in height of the centre of the marks is preferably at half the height of the plane plus or minus 10% of the height of the plane.

According to some embodiments, the storage lane may comprise two rails, one at each longitudinal side of the storage lane, a first of said rails has a traverse cross section comprising at least a first flank being adapted to carry shuttles traveling in said storage lane, and a second flank angled to said first flank, said second flank providing said first elongate plane.

According to some embodiments, the second of said rails has a traverse cross section comprising at least a first flank being adapted to carry shuttles traveling in said storage lane, and a second flank angled to said first flank, said second flank of said second rail provides said second elongate plane.

The first flank is preferably substantially horizontally oriented. This flank may be used to support the driving wheels of a shuttle moving into or out of the storage lane. More preferred, the second flank is angled to the first flank under an angle of about 90°, and is preferably substantially vertically oriented.

The flanks hence preferably have an L-shaped or Z-shaped traverse cross section. The third flank of the Z-shaped traverse cross section may be used as storage support for carrying the goods in the storage lane.

When providing two such rails, one at each longitudinal side of the storage lane, the two first flanks may for a traveling track for the shuttle in the storage lane. The shuttle may use the marks on the second flanks to obtain its position within the storage lane. A shuttle may comprise one sensor to detect the marks on one of the flanks providing the elongate plane. The shuttle may comprise a first sensor to detect the marks on one of the second flanks, and a second sensor to detect the marks on the other of the two second flanks, providing the two elongate planes.

The racking system my comprise more than one storage lane, each storage lane having two longitudinal sides, at least the first longitudinal side being provided with a first elongate plane elongate along said storage lane in longitudinal direction of said lane, said elongate plane being provided with marks provided on or in said elongate plane at regular intervals in longitudinal direction. The storage lanes may hence be substantially identical.

The storage lane may be positioned at different heights or levels in the racking system. One or more such storage lanes may be positioned adjacent to other storage lanes in the racking system. The marks along the elongate planes may all be substantially identical.

The shuttle comprises a driving means to drive the shuttle in a moving direction, said shuttle having two longitudinal sides, said shuttle comprises at least a first sensor to detect objects relatively passing along a first of its longitudinal sides during movement, such as marks on an elongate plane of a racking system comprises one of more storage lanes, each storage lane having a first and a second longitudinal side, at least the first longitudinal side being provided with said elongate plane elongate along said storage lane in longitudinal direction of said lane.

The longitudinal side is the side of the shuttle substantially parallel to the moving direction of the shuttle.

The shuttle may be used to store or remove goods in a racking system according to the first aspect of the invention. The sensor may sense the marks when moving in the storage lane, and may use the number of counted marks to define the position of the shuttle in the storage lane.

The sensor may be any suitable sensor, like a tactile sensor, a distance sensing sensor, an optical sensor even a camera, like a line camera. Preferably the sensor is an optical sensor. The sensing direction is preferably perpendicular to the moving direction. The moving direction and the sensing direction preferably are substantially parallel to a platform of the shuttle, which platform is adapted to carry goods during movement of the shuttle

According to the present invention, the shuttle comprises a second sensor to detect objects relatively passing along the second of its longitudinal sides during movement.

According to some embodiments, both first and second sensor may be adapted to sense the presence or absence of objects at a sensing position along the longitudinal side of the shuttle, the sensing position along the longitudinal side of the first sensor is different from the sensing position along the longitudinal side of the second sensor.

Preferably the first of the two sensors is positioned close to or even at a first lateral side of the shuttle, while the second of the two sensors is positioned close to or even at a second lateral side of the shuttle. The first of the two sensors is preferably positioned at a distance of maximal half the length (in longitudinal direction) of the shuttle from the first lateral side of the shuttle, while the second of the two sensors is preferably positioned at a distance of at least half the length (in longitudinal direction) of the shuttle from the first lateral side of the shuttle. More preferred, the first of the two sensors is preferably positioned at a distance of maximal a quarter of the length (in longitudinal direction) of the shuttle from the first lateral side of the shuttle, while the second of the two sensors is preferably positioned at a distance of at least three quarters of the length (in longitudinal direction) of the shuttle from the first lateral side of the shuttle.

As such anomalies in the repetition of the sensed marks on the plane of a racking system may be detected and taken into account when using the sensed marks along the storage lane to determine the position of the shuttle in the storage lane.

Such anomalies may e.g. be splice plates between seconds of the rails proving the elongate planes. By using the detection system of the marks, e.g. holes or perforations, at both sides of the shuttle but at a different position in the longitudinal direction of the shuttle. At one side of the shuttle, the first sensor may sense the anomaly, e.g. the splice plate, while at the other longitudinal side, the second sensor will continue to detect the marks correctly. During passing the splice plate, the fist sensor having sensed an anomaly, may retrieve the detected pattern of the marks when the shuttle continues to move in the same direction. When the second sensor now senses the anomaly, the first sensor may have already retrieved the mark pattern and the shuttle as such may still be informed about its position correctly. Hence when one of the sensors is obscured of detecting the marks, the other sensor may continue sensing the marks correctly. The same situation may apply when passing vertical supports or uprights of the racking system.

The automated storage may be a 2D or 3D automated storage. The automated storage or automated storage system may be a 2D automated storage, in which shuttles may move in two different, and usually mutually perpendicular directions in a substantially horizontal plane. Possibly the automated storage comprises several parallel levels on which shuttles may move, the levels being positioned on a different height in view of the floor level of the automated storage. Shuttles may be moved between levels by a hoisting means, such as a lift. Hence the automated storage system may be a 3D automated storage. Optionally, the shuttle itself may move between different levels, by means of ramps or alike. Possibly the shuttles according to the invention may comprise a driving means to move the shuttle between levels of the automated storage, e.g. along vertical tracks in the racking system of the automated storage.

Most preferably the automated storage system comprises a racking system having a plurality of storage lanes. The automated storage system preferably is a storage system for storing goods on pallets or in boxes.

### Brief Description of the Drawings

Fig. 1 illustrates schematically a perspective view of a part of a lane, the lane itself being part of a 2D or 3D racking system.
Fig. 2 illustrates schematically a less detailed perspective view of a part of the lane of figure 1.
Fig. 3 illustrates schematically one side of the lane of figure 1.
Fig. 4 illustrates schematically a detail of the lane of figure 1.
Fig. 5 illustrates schematically a top view of the part of the lane of figure 1.

In the different figures, the same reference signs refer to the same or a similar feature.

### Detailed Description of Embodiment(s)

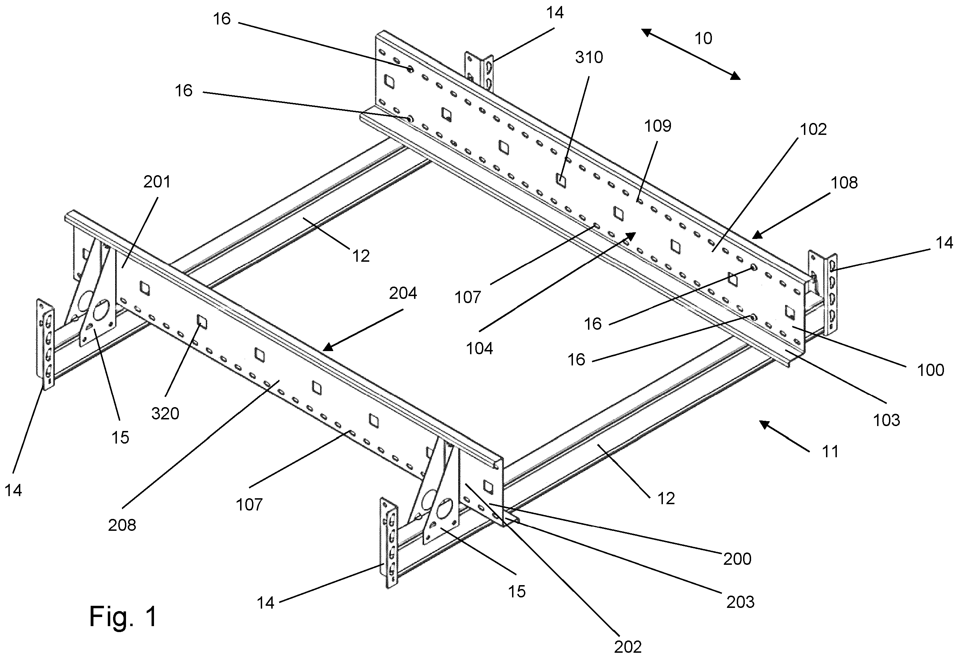

A detail of a racking system adapted for storing goods is shown in the figures 1 to 3. The racking system comprises one of more storage lanes 11, each storage lane having a first 100 and a second 200 longitudinal side. A part of such lane is shown in figure 1. The first longitudinal side 100 is provided with a first elongate plane 101 elongate along the storage lane in longitudinal direction 10 of the lane 11. This elongate plane 101 is provided with marks, being perforations 310 in this elongate plane 101 at regular intervals in longitudinal direction 10. The second longitudinal side 200 is also provided with a first elongate plane 201, elongate along the storage lane in longitudinal direction 10 of the lane. This elongate plane 201 is provided with marks, being perforations 320 in this elongate plane 201 at regular intervals in longitudinal direction 10. From figures 1 to 3 it is clear that the marks 320 in the second elongate plane 201 are aligned with the marks 310 in the first elongate plane 101. The marks 310 and 320 are aligned in the longitudinal direction 10 and for each mark 310 at a given position along the longitudinal direction 10, a mark 320 is provided. Hence the marks 310 in the first elongate plane 101 are provided at the same position in longitudinal direction as compared with the marks 320.

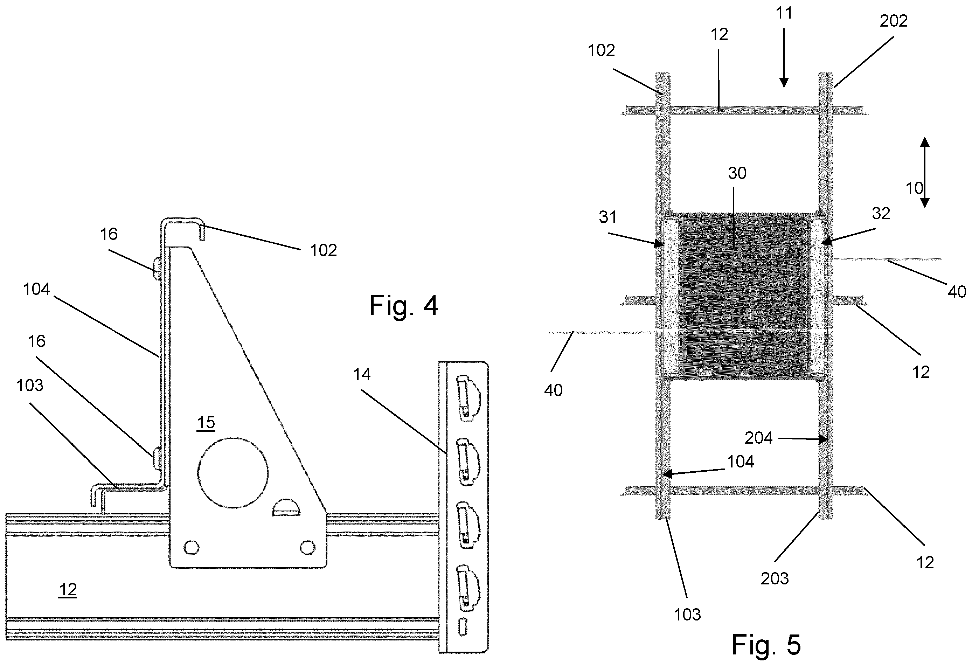

Both elongate planes 101 and 201 are provided as planes of a Z-profiled rail 102 respectively 202, supported on cross beams 12, which themselves are mounted on vertical uprights 14. The Z profiled rails 102 and 202 are positioned and fixed to the cross beams 12 by means of angle brackets 15, as illustrated in figure 4. The angle brackets 15 are screwed to the backside 108 or 208 of the Z profiled rails 102 and 202 by means of screws 16. All these elements are steel elements.

Each of the rails 102 and 202 has a traverse cross section comprising a first flank 103 or 203 being adapted to carry shuttles 30 traveling in the storage lane, as shown in figure 5. The second flank 104 or 204, rectangularly angled to this first flank 103 or 203, and also referred to as web, provides the elongate planes 101 or 201. The Z-profiled rails 102 respectively 202 comprises series of mounting perforations 107, 109, 207 and 209 to receive the screws 16.

As an example, the series of marks 310 and 320 are square perforations, having rounded angles, and having one side parallel to the longitudinal direction 10 of the storage lane 11. The width of the squares is, as an example, about 30mm, whereas the centre to centre interdistance of the marks in longitudinal direction 10 of the storage lane 11 is about 200mm. The marks are provided at about half the height of the elongate planes 101 and 201, more particularly, at a height of about 100mm, the web having a total height of about 210mm.

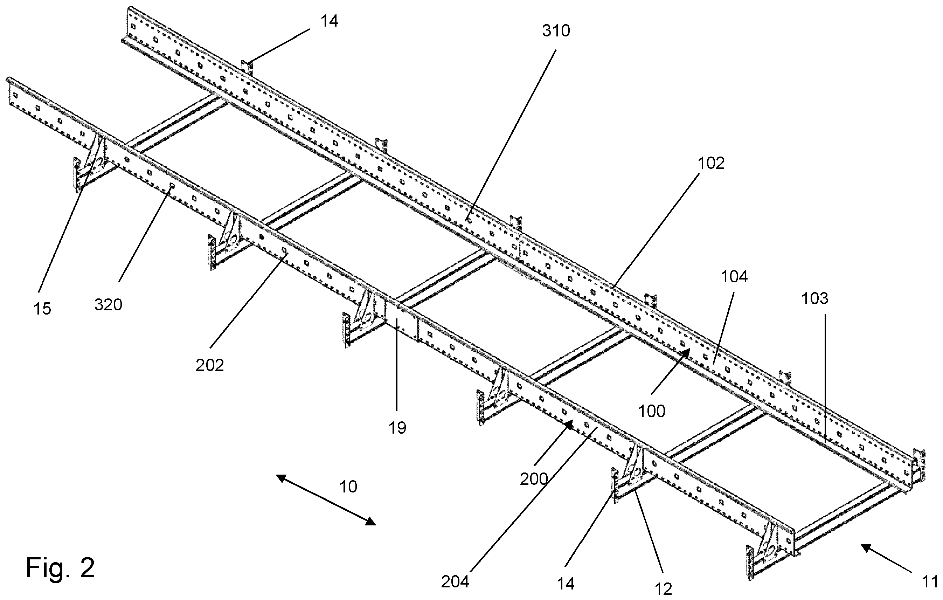

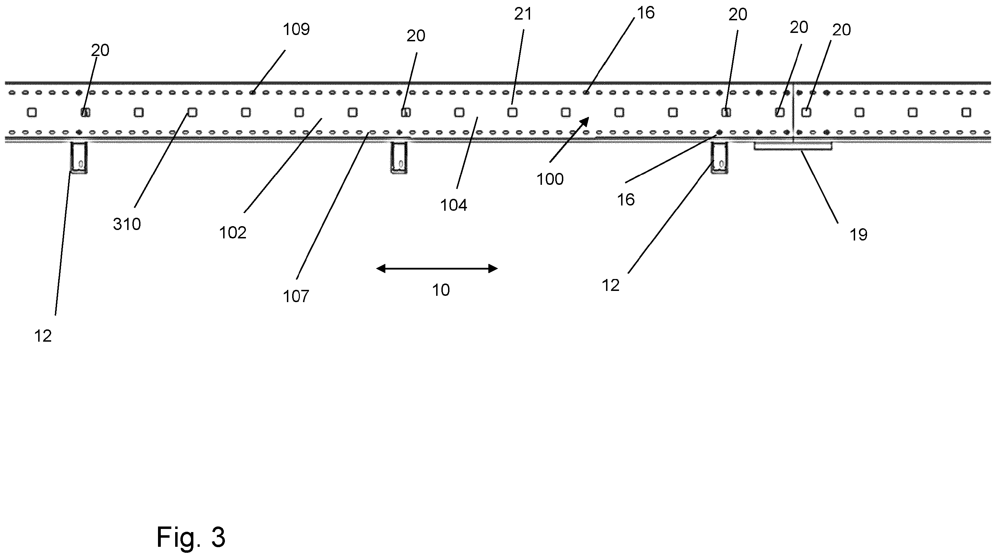

As best shown in figures 2 and 3, at some positioned in the longitudinal direction of the lane 11, the marks 310 or 320, being square perforations at half the height of the web 104 or 204 of the Z-profile, may be closed at the backside 108 or 208 of the Z-profile by the mounting flange of an angle bracket 15, or a coupling plate 19 to couple two adjacent Z-profiles. As such, blocked perforations 20 may be obtained. These blocked perforations 20 may not be detectable by the sensors of the shuttle 30 detecting the open perforations 21 being the marks 310 or 320.

A shuttle 30, having two longitudinal sides 31 and 32, comprises at least one sensor at each longitudinal side 31 and 32 to detect the marks 310 or 320 in the upstanding webs of the Z-profiles on which lower flank the shuttle 30 moves in the lane 11.

The signal, and the number of signals, obtained by the sensors may be used to define the position of the shuttle 30 in the lane 11 in longitudinal direction 10 of the lane 11. As the marks 310 and 320, in this case perforations, are to repeat at regular intervals, hence at regular distances along the rails 102 and 202, the repetition of signals sensed by the sensors when traveling in the lane may be predicted. If the sequence is occasionally interrupted, this interrupted repetition in the obtained signal may be understood as the presence of an angular bracket 15 or a coupling plate 19. As such, even when the signal is not complete, the number of signals may be used to define the position of the shuttle 30 in the lane 11. The sensors are e.g. laser sensors, emitting a light beam 40. As visible in figure 5, the sensors are positioned at a different position in longitudinal direction of the shuttle 30.

The present embodiments are to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions.

## Claims

1. An automated storage comprising a racking system and at least one shuttle (30),
wherein said racking system is adapted for storing goods,
• said racking system comprises one of more storage lanes (11), each storage lane having a first (100) and a second (200) longitudinal side, the first longitudinal side (100) being provided with a first elongate plane (101) elongate along said storage lane in longitudinal direction (10) of said lane (11), said elongate plane being provided with marks (310) provided on or in said elongate plane (101) at regular intervals in longitudinal direction, the second longitudinal side (200) of said storage lane is provided with a second elongate plane (201) elongate along said storage lane in longitudinal direction of said storage lane, said elongate plane being provided with marks (320) provided on or in said elongate plane (201) at regular intervals in longitudinal direction,
• said shuttle (30) comprises a driving means to drive the shuttle in a moving direction, said shuttle having two longitudinal sides (31, 32), said shuttle (30) comprises at least a first sensor to detect objects relatively passing along a first of its longitudinal sides during movement, the shuttle (30) further comprises a second sensor to detect objects relatively passing along the second of its longitudinal sides during movement, both first and second sensor are adapted to sense the presence or absence of objects at a sensing position along the longitudinal side of the shuttle;
**characterised in that**
the sensing position along the longitudinal side of the first sensor is different from the sensing position along the longitudinal side of the second sensor.

2. An automated storage according to claim 1, wherein the marks 320) in or on said second elongate plane (201) are aligned with the marks (310) in or on said first elongate plane (101).

3. An automated storage according to claim 2, wherein for each marks (310) in or on said first elongate plane (101), a mark (320) in or on said second elongate plane is provided at the same position in longitudinal direction of the storage lane.

4. An automated storage according to any one of the preceding claims,
wherein said marks (310, 320) are perforations in said plane (101, 201).

5. An automated storage according to claim 4, wherein said marks (310, 320) are perforations having a square circumference, preferably having one side parallel to the longitudinal direction of the storage lane (11).

6. An automated storage according to any one of the preceding claims,
wherein the width of said marks (310, 320) in longitudinal direction of the storage lane (11) is in the range of 15mm to 60mm.

7. An automated storage according to any one of the preceding claims,
wherein the centre to centre interdistance of said marks (310, 320) in longitudinal direction of the storage lane is in the range of 100mm to 300mm.

8. An automated storage according to any one of the preceding claims,
wherein said storage lane (11) comprises two rails (102, 202), one at each longitudinal side of the storage lane (11), a first (102) of said rails (102, 202) has a traverse cross section comprising at least a first flank (103) being adapted to carry shuttles (30) traveling in said storage lane (11), and a second flank (203) angled to said first flank (103), said second flank (203) providing said first elongate plane (101). wherein the second

9. An automated storage according to claim 8, wherein the second (202) of said rails (102, 202) has a traverse cross section comprising at least a first flank (203) being adapted to carry shuttles (30) traveling in said storage lane (11), and a second flanl (204) angled to said first flank (203), said second flank (204) of said second rail (202) provides said second elongate plane (201).

10. An automated storage according to one of the preceding claims, wherein both the first sensor and the second sensor are a tactile sensor, a distance sensing sensor, or an optical sensor.

11. An automated storage according to claim 10, wherein both the first sensor and the second sensor is a laser sensor.

12. An automated storage according to one of the preceding claims, wherein the sensing directions of the first and second sensor are perpendicular to the moving direction.

13. An automated storage according to any one of the preceding claims, wherein the first of the two sensors is preferably positioned at a distance of maximal half the length in longitudinal direction of the shuttle (30) from the first lateral side of the shuttle (30), while the second of the two sensors is preferably positioned at a distance of at least half the length in longitudinal direction of the shuttle (30) from the first lateral side of the shuttle (30).

14. An automated storage according to claim 13, wherein the first of the two sensors is preferably positioned at a distance of maximal a quarter of the length in longitudinal direction of the shuttle (30) from the first lateral side of the shuttle (30), while the second of the two sensors is preferably positioned at a distance of at least three quarters of the length in longitudinal direction of the shuttle (30) from the first lateral side of the shuttle (30).

## Patentansprüche

1. Automatisiertes Lager, umfassend ein Regalsystem und zumindest einen Shuttle (30),
wobei das Regalsystem zum Lagern von Waren ausgelegt ist,
• wobei das Regalsystem eine von mehreren Lagerbahnen (11) umfasst,
wobei jede Lagerbahn eine erste (100) und eine zweite (200) Längsseite aufweist, wobei die erste Längsseite (100) mit einer ersten länglichen Ebene (101) bereitgestellt ist, die länglich entlang der Lagerbahn in Längsrichtung (10) der Bahn (11) ist, wobei die längliche Ebene mit Markierungen (310) bereitgestellt ist, die auf oder in der länglichen Ebene (101) in regelmäßigen Intervallen in Längsrichtung bereitgestellt sind, wobei die zweite Längsseite (200) der Lagerbahn mit einer zweiten länglichen Ebene (201) bereitgestellt ist, die länglich entlang der Lagerbahn in Längsrichtung der Lagerbahn ist, wobei die längliche Ebene mit Markierungen (320) bereitgestellt ist, die auf oder in der länglichen Ebene (201) in regelmäßigen Intervallen in Längsrichtung bereitgestellt sind,
• wobei das Shuttle (30) ein Antriebsmittel zum Antreiben des Shuttles in einer Bewegungsrichtung umfasst, wobei das Shuttle zwei Längsseiten (31, 32) aufweist, wobei das Shuttle (30) zumindest einen ersten Sensor zum Detektieren von Objekten umfasst, die während Bewegung relativ entlang einer ersten seiner Längsseiten verlaufen, wobei das Shuttle (30) ferner einen zweiten Sensor zum Detektieren von Objekten umfasst, die während Bewegung relativ entlang der zweiten seiner Längsseiten verlaufen, wobei sowohl der erste als auch der zweite Sensor ausgelegt sind, um die Anwesenheit oder Abwesenheit von Objekten an einer Erfassungsposition entlang der Längsseite des Shuttles zu erfassen;
**dadurch gekennzeichnet, dass**
sich die Erfassungsposition entlang der Längsseite des ersten Sensors von der Erfassungsposition entlang der Längsseite des zweiten Sensors unterscheidet.

2. Automatisiertes Lager nach Anspruch 1, wobei die Markierungen 320) in oder auf der zweiten länglichen Ebene (201) mit den Markierungen (310) in oder auf der ersten länglichen Ebene (101) ausgerichtet sind.

3. Automatisiertes Lager nach Anspruch 2, wobei für jede Markierung (310) in oder auf der ersten länglichen Ebene (101) eine Markierung (320) in oder auf der zweiten länglichen Ebene an der gleichen Position in Längsrichtung der Lagerbahn bereitgestellt ist.

4. Automatisiertes Lager nach einem der vorhergehenden Ansprüche, wobei die Markierungen (310, 320) Perforationen in der Ebene (101, 201) sind.

5. Automatisiertes Lager nach Anspruch 4, wobei die Markierungen (310, 320) Perforationen mit einem quadratischen Umfang sind, die bevorzugt eine Seite parallel zu der Längsrichtung der Lagerbahn (11) aufweisen.

6. Automatisiertes Lager nach einem der vorhergehenden Ansprüche, wobei die Breite der Markierungen (310, 320) in Längsrichtung der Lagerbahn (11) in der Spanne von 15 mm bis 60 mm ist.

7. Automatisiertes Lager nach einem der vorhergehenden Ansprüche, wobei der Abstand von Mitte zu Mitte der Markierungen (310, 320) in Längsrichtung der Lagerbahn in der Spanne von 100 mm bis 300 mm ist.

8. Automatisiertes Lager nach einem der vorhergehenden Ansprüche, wobei die Lagerbahn (11) zwei Schienen (102, 202) umfasst, eine an jeder Längsseite der Lagerebene (11), wobei eine erste (102) der Schienen (102, 202) einen durchlaufenden Querschnitt aufweist, der zumindest eine erste Flanke (103), die dazu ausgelegt ist, Shuttles (30) zu tragen, die sich in der Lagerebene (11) bewegen, und eine zweite Flanke (203), die zu der ersten Flanke (103) abgewinkelt ist, umfasst, wobei die zweite Flanke (203) die erste längliche Ebene (101) bereitstellt.

9. Automatisiertes Lager nach Anspruch 8, wobei die zweite (202) der Schienen (102, 202) einen durchlaufenden Querschnitt aufweist, der zumindest eine erste Flanke (203), die dazu ausgelegt ist, Shuttles (30) zu tragen, die sich in der Lagerbahn (11) bewegen, und eine zweite Flanke (204), die zu der ersten Flanke (203) abgewinkelt ist, umfasst, wobei die zweite Flanke (204) der zweiten Schiene (202) die zweite längliche Ebene (201) bereitstellt.

10. Automatisiertes Lager nach einem der vorhergehenden Ansprüche, wobei sowohl der erste Sensor als auch der zweite Sensor ein taktiler Sensor, ein Abstandserfassungssensor oder ein optischer Sensor sind.

11. Automatisiertes Lager nach Anspruch 10, wobei sowohl der erste Sensor als auch der zweite Sensor ein Lasersensor sind.

12. Automatisiertes Lager nach einem der vorhergehenden Ansprüche, wobei die Erfassungsrichtungen des ersten und des zweiten Sensors senkrecht zu der Bewegungsrichtung sind.

13. Automatisiertes Lager nach einem der vorhergehenden Ansprüche, wobei der erste der zwei Sensoren bevorzugt in einem Abstand von maximal der Hälfte der Länge in Längsrichtung des Shuttles (30) von der ersten lateralen Seite des Shuttles (30) positioniert ist, während der zweite der zwei Sensoren bevorzugt in einem Abstand von zumindest der Hälfte der Länge in Längsrichtung des Shuttles (30) von der ersten lateralen Seite des Shuttles (30) positioniert ist.

14. Automatisiertes Lager nach Anspruch 13, wobei der erste der zwei Sensoren bevorzugt in einem Abstand von maximal einem Viertel der Länge in Längsrichtung des Shuttles (30) von der ersten lateralen Seite des Shuttles (30) positioniert ist, während der zweite der zwei Sensoren bevorzugt in einem Abstand von zumindest drei Viertel der Länge in Längsrichtung des Shuttles (30) von der ersten lateralen Seite des Shuttles (30) positioniert ist.

## Revendications

1. Entrepôt automatisé comprenant un système de rayonnage et au moins une navette (30), dans lequel ledit système de rayonnage est adapté pour entreposer des marchandises,
• ledit système de rayonnage comprend une ou plusieurs voies d'entrepôt (11), chaque voie d'entrepôt présentant un premier (100) et un second (200) côté longitudinal, le premier côté longitudinal (100) étant doté d'un premier plan allongé (101) allongé le long de ladite voie d'entrepôt dans la direction longitudinale (10) de ladite voie (11), ledit plan allongé étant doté de marques (310) ménagées sur ou dans ledit plan allongé (101) à intervalles réguliers dans la direction longitudinale, le second côté longitudinal (200) de ladite voie d'entrepôt est doté d'un second plan allongé (201) allongé le long de ladite voie d'entrepôt dans la direction longitudinale de ladite voie d'entrepôt, ledit plan allongé étant doté de marques (320) ménagées sur ou dans ledit plan allongé (201) à intervalles réguliers dans la direction longitudinale,
• ladite navette (30) comprend un moyen d'entraînement pour entraîner la navette dans une direction de déplacement, ladite navette présentant deux côtés longitudinaux (31, 32), ladite navette (30) comprend au moins un premier capteur pour détecter des objets passant relativement le long d'un premier de ses côtés longitudinaux pendant le déplacement, la navette (30) comprend en outre un second capteur pour détecter des objets passant relativement le long du second de ses côtés longitudinaux pendant le déplacement, les premier et second capteurs sont tous deux adaptés pour détecter la présence ou l'absence d'objets au niveau d'une position de détection le long du côté longitudinal de la navette ;
**caractérisé en ce que** la position de détection le long du côté longitudinal du premier capteur est différente de la position de détection le long du côté longitudinal du second capteur.

2. Entrepôt automatisé selon la revendication 1, dans lequel les marques 320) dans ou sur ledit second plan allongé (201) sont alignées sur les marques (310) dans ou sur ledit premier plan allongé (101).

3. Entrepôt automatisé selon la revendication 2, dans lequel pour chaque marque (310) dans ou sur ledit premier plan allongé (101), une marque (320) dans ou sur ledit second plan allongé est ménagée au niveau de la même position dans la direction longitudinale de la voie d'entrepôt.

4. Entrepôt automatisé selon l'une quelconque des revendications précédentes, dans lequel lesdites marques (310, 320) sont des perforations dans ledit plan (101, 201).

5. Entrepôt automatisé selon la revendication 4, dans lequel lesdites marques (310, 320) sont des perforations présentant une circonférence carrée, présentant de préférence un côté parallèle à la direction longitudinale de la voie d'entrepôt (11).

6. Entrepôt automatisé selon l'une quelconque des revendications précédentes, dans lequel la largeur desdites marques (310, 320) dans la direction longitudinale de la voie d'entrepôt (11) est comprise dans la plage de 15 mm à 60 mm.

7. Entrepôt automatisé selon l'une quelconque des revendications précédentes, dans lequel l'interdistance de centre à centre desdites marques (310, 320) dans la direction longitudinale de la voie d'entrepôt est comprise dans la plage de 100 mm à 300 mm.

8. Entrepôt automatisé selon l'une quelconque des revendications précédentes, dans lequel ladite voie d'entrepôt (11) comprend deux rails (102, 202), un de chaque côté longitudinal de la voie d'entrepôt (11), un premier (102) desdits rails (102, 202) présente une section transversale transverse comprenant au moins un premier flanc (103) adapté pour porter des navettes (30) se déplaçant dans ladite voie d'entrepôt (11), et un second flanc (203) incliné par rapport audit premier flanc (103), ledit second flanc (203) ménageant ledit premier plan allongé (101).

9. Entrepôt automatisé selon la revendication 8, dans lequel le second (202) desdits rails (102, 202) présente une section transversale transverse comprenant au moins un premier flanc (203) adapté pour porter des navettes (30) circulant dans ladite voie d'entrepôt (11), et un second flanc (204) incliné par rapport audit premier flanc (203), ledit second flanc (204) dudit second rail (202) ménage ledit second plan allongé (201).

10. Entrepôt automatisé selon l'une des revendications précédentes, dans lequel le premier capteur et le second capteur sont tous deux un capteur tactile, un capteur de détection de distance ou un capteur optique.

11. Entrepôt automatisé selon la revendication 10, dans lequel le premier capteur et le second capteur sont tous deux un capteur laser.

12. Entrepôt automatisé selon l'une des revendications précédentes, dans lequel les directions de détection des premier et second capteurs sont perpendiculaires à la direction de déplacement.

13. Entrepôt automatisé selon l'une quelconque des revendications précédentes, dans lequel le premier des deux capteurs est de préférence positionné à une distance maximale de la moitié de la longueur dans la direction longitudinale de la navette (30) à partir du premier côté latéral de la navette (30), tandis que le second des deux capteurs est de préférence positionné à une distance d'au moins la moitié de la longueur dans la direction longitudinale de la navette (30) à partir du premier côté latéral de la navette (30).

14. Entrepôt automatisé selon la revendication 13, dans lequel le premier des deux capteurs est de préférence positionné à une distance maximale d'un quart de la longueur dans la direction longitudinale de la navette (30) à partir du premier côté latéral de la navette (30), tandis que le second des deux capteurs est de préférence positionné à une distance d'au moins trois quarts de la longueur dans la direction longitudinale de la navette (30) à partir du premier côté latéral de la navette (30).
